# EUROPÄISCHE PATENTSCHRIFT

(11) **EP 1 743 788 B1**
(45) Veröffentlichungstag und Bekanntmachung des Hinweises auf die Patenterteilung: **22.12.2010**
(21) Anmeldenummer: 06008435.7
(22) Anmeldetag: 24.04.2006
(51) Int. Cl.: B60H 1/00, B60H 1/22

(54) **Fahrzeugtemperiersystem**
Temperature regulating system for a vehicle
Système pour tempérer un véhicule

(30) Priorität: 12.07.2005 DE 102005032524
(43) Veröffentlichungstag der Anmeldung: 17.01.2007
(73) Patentinhaber: J. Eberspächer GmbH & Co. KG, 73730 Esslingen (DE)
(72) Erfinder: Schlecht, Patric, 73760 Ostfildern (DE); Collmer, Andreas, 73773 Aichwald (DE); Haefner, Michael, 70469 Stuttgart (DE)
(74) Vertreter: Ruttensperger, Bernhard

(56) Entgegenhaltungen:
- DE-A1- 10 227 623
- US-A1- 2003 127 087
- US-B1- 6 564 795

## Beschreibung

Die vorliegende Erfindung betrifft ein Fahrzeugtemperiersystem, mit welchem die in einen Fahrzeuginnenraum einzuleitende Luft konditioniert werden kann. D.h., mit einem derartige Fahrzeugtemperiersystem kann auf diese einzuleitende Luft beispielsweise Wärme übertragen werden, es kann ggf. aber auch durch Einsatz einer Klimaanlage der Luft Wärme und Feuchtigkeit entzogen werden.

Ein derartiges Fahrzeugtemperiersystem ist in der älteren deutschen Patentanmeldung 10 2005 019 828 beschrieben. Die durch ein Luftfördergebläse geförderte Luft strömt zunächst in Richtung zu dem Verdampfer einer Klimaanlage, um dort ggf. Wärme abzugeben bzw. auch entfeuchtet zu werden. Je nachdem, wie eine stromabwärts dann folgende Stellklappe gestellt ist, strömt die Luft dann entweder direkt in Richtung zu dem Fahrzeuginnenraum oder ggf. zu einem mit Motorkühlmittel gespeisten Wärmetauscher, oder umströmt den Wärmetauscher eines Fahrzeugheizgerätes. Dieser Wärmetauscher weist grundsätzlich einen langgestreckten Wärmetauscherkörper auf mit einer Mehrzahl von in dessen Längserstreckungsrichtung aufeinander folgend mit Abstand angeordneten Wärmeübertragungsrippen daran. Diese Wärmeübertragungsrippen sind im Wesentlichen so orientiert, dass sie parallel zur Strömungsrichtung der den Wärmetauscher dieses brennstoffbetriebenen Heizgerätes umströmenden Luft liegen. In Strömungsrichtung vor diesem Wärmetauscher des brennstoffbetriebenen Heizgerätes bzw. auch vor den daran vorgesehenen Wärmeübertragungsrippen liegt ein Wandabschnitt, der dafür sorgt, dass die an den Wärmeübertragungsrippen zu erwärmende Luft in definierter Art und Weise diese Wärmeübertragungsrippen anströmt. Ein Nachteil bei dieser Anordnung ist, dass durch diese strömungsmäßig stromaufwärts des Wärmetauschers des brennstoffbetriebenen Heizgerätes gelegene Strömungsführungswandung ein vergleichsweise großer Oberflächenbereich der Wärmeübertragungsrippen gegen Anströmung bzw. Umströmung blockiert ist, was eine Beeinträchtigung der Wärmeübertragungseffizienz zur Folge haben kann.

Die DE 102 27 623 A1 offenbart ein Luftbehandlungsmodul zur Behandlung von in einen Fahrzeuginnenraum eines Fahrzeugs einzuleitender Luft gemäß Oberbegriff des Anspruchs 1, bei welchem die durch ein Luftfördergebläse geförderte Luft durch einen Wärmetauscher hindurch in den Fahrzeugraum gefördert wird. Der Wärmetauscher ist von einem Wärmetauschermedium durchströmbar, welches durch ein in einem Motrorraum eines Fahrzeugs angeordnetes, brennstoffbetriebenes Heizgerät erwärmt wird.

Die US 2003/127087 A1 offenbart eine Wärmetauscherbaugruppe mit einer Mehrzahl im Wesentlichen zueinander angeordneter Wärmetauscherpanele. Jedes Panel weist einen plattenartigen Bereich auf, in welchem ein mäanderartig gewundener Strömungskanal für ein Wärme transportierendes Medium sich zwischen einer Einlassöffnung und einer Auslassöffnung erstreckt. Mehrere derartige Panele liegen nebeneinander. Die zu erwärmende Luft strömt zwischen den Panelen hindurch und kommt dabei in Kontakt mit der Oberfläche derselben im Bereich ihrer plattenartigen Bereiche und im Bereich der mäanderartig gewundenen Kanäle. Es ist weiterhin eine Ablenkbaugruppe vorhanden, welche mit zungenartigen Bereichen zwischen die Panele eingreift und für eine Ablenkung der zwischen den Panelen hindurchströmenden Luft sorgt.

Es ist die Aufgabe der vorliegenden Erfindung, ein Fahrzeugtemperiersystem vorzusehen, bei welchem die Wärmeübertragungsrippen eines Wärmetauschers zur verbesserten Wärmeübertragungseffizienz besser umströmt werden können.

Erfindungsgemäß wird diese Aufgabe gelöst durch ein Fahrzeugtemperiersystem, umfassend in einem Gehäuse ein zu konditionierende Luft förderndes Luftfördergebläse und einen Wärmetauscher eines Heizgerätes, wobei der Wärmetauscher einen im Wesentlichen quer zu einer Luftströmungsrichtung langgestreckten Wärmetauscherkörper und an diesem eine Mehrzahl von in Richtung der Längserstreckung des Wärmetauscherkörpers in Abstand zueinander angeordneten Wärmeübertragungsrippen umfasst, wobei in dem Gehäuse eine die Strömung in Richtung zu dem Wärmetauscher leitende Strömungsführungswandungsanordnung vorgesehen ist, wobei die Strömungsführungswandungsanordnung sich wenigstens bereichsweise bis in den Bereich zwischen die Wärmeübertragungsrippen hinein erstreckt.

Bei dem erfindungsgemäßen Temperiersystem liegt also die Strömungsführungswandung nicht in Strömungsrichtung stromaufwärts der Wärmeübertragungsrippen, sondern liegt im Bereich der Wärmeübertragungsrippen selbst bzw. greift in diese ein. Somit wird eine wesentlich bessere Anströmbarkeit im Wesentlichen der gesamten Oberfläche der Wärmeübertragungsrippen erlangt, was eine deutlich bessere Ausnutzbarkeit der zu übertragende Wärme mit sich bringt. Auch trägt die Umlenkung der Strömung zu einer Erhöhung des Wirkungsgrads bei.

Um beispielsweise auch die Oberfläche der Strömungsführungswandung effizient zur Wärmeübertragung nutzen zu können, wird vorgeschlagen, dass die Strömungsführungswandungsanordnung bis an den Wärmetauscherkörper heranreicht und an diesen anschließt. In diesem Falle kann die Strömungsführungswandungsanordnung selbst vom Wärmetauscherkörper Wärme aufnehmen und an die dort umgelenkte Luft übertragen.

Weiter ist es möglich, dass wenigstens bereichsweise zwischen der Strömungsführungswandungsanordnung und dem Wärmetauscherkörper ein Strömungsdurchtrittszwischenraum gebildet ist. Auf diese Art und Weise wird sichergestellt, dass ein Teilbereich der zu fördernden Luft auch durch einen derartigen Zwischenraum hindurchtreten kann, so dass kein durch Staueffekte möglicherweise generiertes Absinken der Wärmeübertragungseffizienz erzeugt wird.

Bei einer vergleichsweise einfach aufzubauenden Ausgestaltungsform kann vorgesehen sein, dass die Strömungsführungswandungsanordnung von dem Wärmetauscher getrennt ausgebildet ist und dass die Wärmeübertragungsrippen einen Aussparungsbereich bilden, in welchen die Strömungsführungswandungsanordnung eingreift.

Alternativ ist es möglich, dass wenigstens ein erster Teil der Strömungsführungswandungsanordnung mit dem Wärmetauscher integral ausgebildet ist. Dies ist vor allem mit Hinblick auf das Vergrößern der zur Wärmeübertragung nutzbaren Oberfläche und auch mit Hinblick auf die Herstellung in einem Gießvorgang besonders vorteilhaft. Auch kann auf ein zusätzliches Bauteil verzichtet werden. Bei dieser Ausgestaltungsform kann weiter vorgesehen sein, dass der erste Teil der Strömungsführungswandungsanordnung sich radial - bezogen auf die Längserstreckungsrichtung des Wärmetauscherkörpers ― über die Wärmeübertragungsrippen hinaus erstreckt. Alternativ ist es möglich, dass der erste Teil der Strömungsführungswandungsanordnung eine geringere Radialerstreckung - radial bezogen auf die Längserstreckungsrichtung des Wärmetauscherkörpers - aufweist, als die Wärmeübertragungsrippen.

Um die gewünschte Strömungsführungscharakteristik in weiter verbesserter Art und Weise erhalten zu können, wird vorgeschlagen, dass ein von dem Wärmetauscher getrennt ausgebildeter zweiter Teil der Strömungsführungswandungsanordnung sich radial bis an den ersten Teil der Strömungsführungswandungsanordnung heran erstreckt.

Zum Vermeiden von Luftstauungen, die möglicherweise Nachteile bei der Anströmbarkeit der Wärmeübertragungsrippen zur Folge haben könnten, wird vorgeschlagen, dass zwischen dem ersten Teil der Strömungsführungswandung und dem zweiten Teil der Strömungsführungswandungsanordnung wenigstens bereichsweise ein Strömungsdurchtrittszwischenraum gebildet ist. Beispielsweise kann vorgesehen sein, dass der erste Teil der Strömungsführungswandungsanordnung und der zweite Teil der Strömungsführungswandungsanordnung sich radial überlappen. Alternativ ist es aber auch möglich, dass die Wärmeübertragungsrippen einen Aussparungsbereich bilden, in welchen der zweite Teil der Strömungsführungswandungsanordnung eingreift.

Bei dem erfindungsgemäßen Fahrzeugtemperiersystem kann das Luftfördergebläse in Strömungsrichtung stromaufwärts des Wärmetauschers angeordnet sein und es ist weiterhin möglich, dass stromaufwärts des Wärmetauschers eine Verdampferanordnung einer Klimaanlage vorgesehen ist. Stromabwärts des Wärmetauschers bei Einschaltung desselben in den Strömungskreislauf bzw. auch stromabwärts des Luftfördergebläses kann ein weiterer Wärmetauscher eines Fahrzeugkühlmittelkreislaufs angeordnet sein.

Die vorliegende Erfindung wird nachfolgend mit Bezug auf die beiliegenden Zeichnungen detailliert beschrieben. Es zeigt:
- Fig. 1: eine prinzipielle Darstellung eines erfindungsgemäßen Fahrzeugtemperiersystems mit seinen wesentlichen Komponenten;
- Fig. 2: eine perspektivische, aufgeschnittene Darstellung eines bei dem System der Fig. 1 einsetzbaren Fahrzeugheizgerätes;
- Fig. 3: eine Detailansicht des in Fig. 1 gezeigten Systems, welche den das Fahrzeugheizgerät aufweisenden Abschnitt vergrößert darstellt;
- Fig. 4: eine der Fig. 3 entsprechende Darstellung einer alternativen Ausgestaltungsart;
- Fig. 5: eine der Fig. 3 entsprechende Darstellung einer alternativen Ausgestaltungsart;
- Fig. 6: eine der Fig. 3 entsprechende Darstellung einer alternativen Ausgestaltungsart.

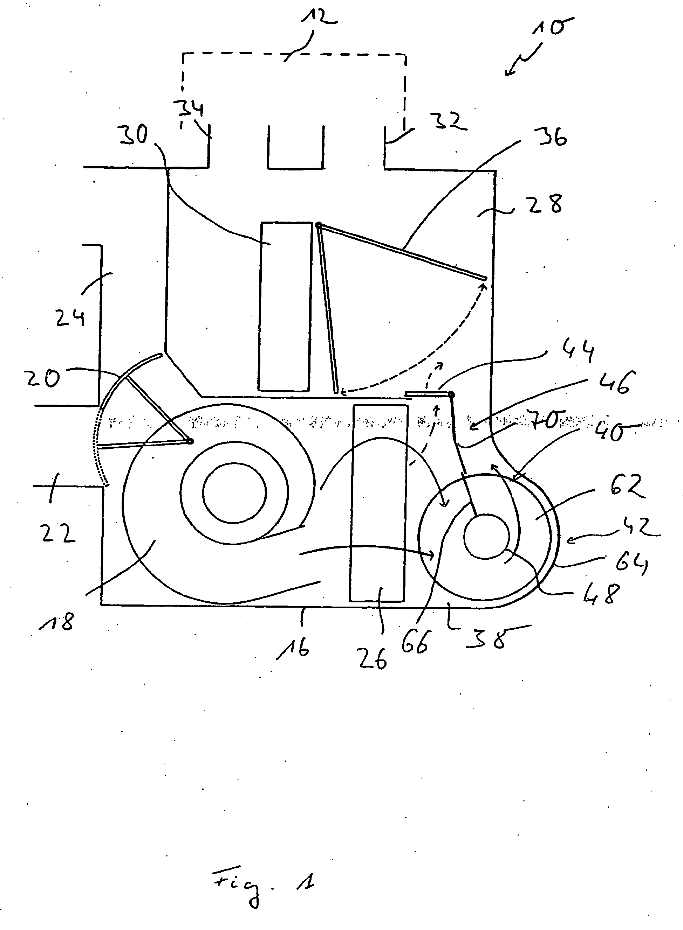

In Fig. 1 ist ein erfindungsgemäßes Fahrzeugtemperiersystem mit 10 bezeichnet. Das Fahrzeugtemperiersystem 10 dient dazu, die in einen nur schematisch angedeuteten Fahrzeuginnenraum 12 einzuleitende Luft zu konditionieren. Konditionieren bedeutet dabei, dass diese Luft einerseits auf eine gewünschte Temperatur gebracht werden kann, also beispielsweise erwärmt oder gekühlt werden kann, oder/und dass dieser Luft Feuchtigkeit entzogen wird, um das Beschlagen der Fensterscheiben des Fahrzeugs zu vermeiden. Auch das Mischverhältnis Frischluft/Umluft kann einen Aspekt der Konditionierung bilden.

Das Fahrzeugtemperiersystem 10 weist ein Gehäuse 16 auf. In dem Gehäuse 16 ist ein Luftfördergebläse 18 vorgesehen, durch welches Luft in das Gehäuse 16 gesaugt wird und druckseitig in Richtung zum Fahrzeuginnenraum 12 gefördert wird. Im dargestellten Ausgestaltungsbeispiel ist stromaufwärts des Luftfördergebläses 18 eine Frischluft/Umluft-Einstelleinrichtung 20 vorgesehen, die durch entsprechende Verstellung eine Variation des Verhältnisses der zu fördernden Frischluft L_{F} und Umluft L_{U} ermöglicht. Hierzu kann durch entsprechende Verstellung der Einrichtung 20 der zur Außenumgebung hin führende Frischluftkanal 22 in gewünschtem Ausmaß freigegeben bzw. blockiert werden, ebenso wie der Umluft Lu aus dem Fahrzeuginnenraum 12 heranführende Umluftkanal 24. In den in Fig. 1 dargestellten Extrempositionierungen ist es möglich, den Frischluftkanal 22 oder den Umluftkanal 24 vollständig abzusperren.

Stromabwärts des Luftfördergebläses 18 ist eine Verdampfer/Wärmetauscher-Einrichtung 26 einer nicht weiter dargestellten Klimaanlage vorgesehen. Durch Betreiben der Klimaanlage kann bei der in der Einrichtung 26 stattfindenden Verdampfung der diese umströmenden Luft Wärme und auch Feuchtigkeit entzogen werden. Nach Durchströmung der Einrichtung 26 gelangt die geförderte Luft zu einem Raumbereich 38, in welchem das Gehäuse 16 eine beispielsweise rundungsartige Ausbauchung aufweist. In diesem Raumbereich 38 ist ein Wärmetauscher 40 eines allgemein mit 42 bezeichneten und nachfolgend noch detaillierter beschriebenen Fahrzeugheizgerätes 42 vorgesehen. Je nachdem, wie eine stromabwärts folgende Stellklappe 44 gestellt ist, strömt die Luft nach Umströmung der Einrichtung 26 direkt oder über den Wärmetauscher 40 in einen weiter stromabwärtigen Raumbereich 28. In diesem Raumbereich 28 ist ein weiterer Wärmetauscher 30 vorgesehen. Dieser Wärmetauscher 30 ist von dem in einem Motorkühlmittelkreislauf zirkulierenden Kühlmittel durchströmbar, so dass dann, wenn dieser Wärmetauscher 30 von der in den Fahrzeuginnenraum 12 einzuleitenden Luft umströmt wird, auf diese Luft Wärme übertragen wird. Bei gleichzeitig aktiver Klimaanlage und aktivem Wärmetauscher 30 kann die durch das Luftfördergebläse 18 geförderte Luft zunächst gekühlt und dabei auch getrocknet werden, während sie dann im Wärmetauscher 30 wieder auf die gewünschte Temperatur erwärmt und somit erwärmt und getrocknet in den Fahrzeuginnenraum 12 eingeleitet werden kann. Hierzu sind beispielsweise mehrere Einleitbereiche 32, 34 vorgesehen, die an verschiedenen Positionen verteilt sein können, um den Fahrzeuginnenraum 12 gezielt und möglichst gleichmäßig, sofern dies gewünscht ist, zu erwärmen. Selbstverständlich können den Einleiteinrichtungen 32, 34 Organe zugeordnet sein, welche diese wahlweise manuell oder automatisiert abschließen bzw. freigeben.

Um den Wärmetauscher 30 aktivieren bzw. deaktivieren zu können, ist in dem Raumbereich 28 eine Stellklappe 36 vorgesehen. Je nach Stellung dieser Stellklappe 36 kann die von der Verdampfer/Wärmetauscher-Einrichtung 26 in den Raumbereich 28 strömende Luft entweder vollständig oder teilweise in Richtung zum Wärmetauscher 30 geleitet werden, oder zumindest teilweise so geleitet werden, dass sie unmittelbar und ohne Umströmung des Wärmetauschers 30 zu den Einleitbereichen 32, 34 gelangt.

Es ist selbstverständlich, dass die verschiedenen vorangehend beschriebenen Systembereiche, die zur Veränderung des Behandlungszustandes verstellt werden müssen oder eingeschaltet oder ausgeschaltet werden müssen, mit entsprechenden Antrieben oder Aktuatoren versehen sein können bzw. unter der Ansteuerung einer Ansteuereinrichtung stehen, um den gewünschten Betrieb zu erlangen.

Im Folgenden wird der den Raumbereich 38 umfassende Bereich des Gehäuses 16 mit den darin vorhandenen Systembereichen, insbesondere dem Fahrzeugheizgerät 42 und einer Strömungsführungswandungsanordnung 46, detaillierter beschrieben.

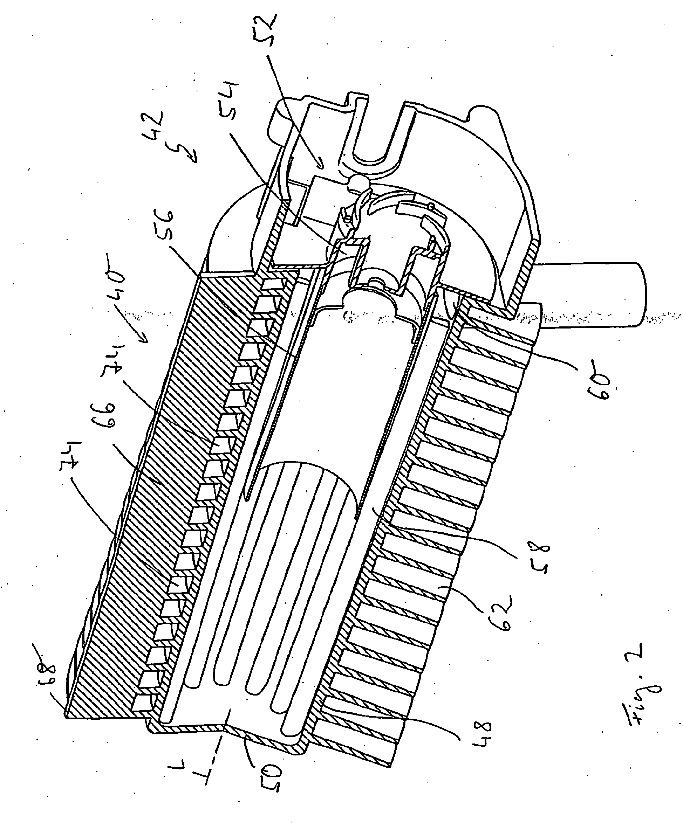

Das Fahrzeugheizgerät 42, welches in Fig. 2 perspektivisch und teilweise aufgeschnitten dargestellt ist, umfasst den Wärmetauscher 40 mit einem langgestreckten, näherungsweise zylindrischen Wärmetauscherkörper 48. Dieser ist an einem Endbereich durch einen Boden 50 abgeschlossen und ist an seinem anderen Endbereich mit dem nur schematisch angedeuteten Brenner 52 verbunden. Durch die Verbrennung eines Gemisches aus Brennstoff bzw. Brennstoffdampf und Verbrennungsluft in diesem Brenner 52 werden heiße Verbrennungsabgase erzeugt, die nach dem Austritt aus einer Brennkammer 54 zunächst in den von einem Flammrohr 56 umschlossenen Raumbereich gelangen, dann weiter in Richtung zum Boden 50 strömen, dort umgelenkt werden, und dann entlang der im Wesentlichen zylindrischen Wandung des Wärmetauscherkörpers 48 und an deren Innenseite vorgesehenen, in der Längsrichtung L des Wärmetauscherkörpers 48 sich erstreckenden Rippen 58 zu einem Abgasauslass 60 zurückströmen. Dabei nimmt der Wärmetauscherkörper 48 Wärme von den heißen Verbrennungsabgasen auf und überträgt diese auf die an seinem Außenumfang vorgesehenen Wärmeübertragungsrippen 62. Diese ringscheibenartig geformten Wärmeübertragungsrippen 62, welche näherungsweise senkrecht zur Längserstreckungsrichtung L des Wärmetauscherkörpers 48 stehen, sind beispielsweise mit diesem integral ausgebildet, z.B. in einem Gussvorgang, so dass ein sehr stabiler und eine gute Wärmeübertragungscharakteristik aufweisender Verbund geschaffen ist. Selbstverständlich ist es auch denkbar, diese Rippen 62 vom Wärmetauscherkörper 48 separat auszugestalten und nachträglich an diesen anzubinden.

In der Fig. 1 erkennt man den schematisch angedeuteten Wärmetauscherkörper 48 mit den diesen umgebenden Rippen 62. Das Gehäuse 16 ist vorzugsweise auf die Formgebung dieser Rippen und die Längserstreckungsrichtung des Wärmetauscherkörpers 48 so abgestimmt, dass ein Wandungsbereich 64 zumindest einen Umfangsabschnitt der Rippen 62 mit nur geringem Abstand umgibt. Ist die Stellklappe 44 in der in Fig. 1 erkennbaren Stellung, so muss die vom Gebläse 18 herangeförderte Luft auf Grund des Vorhandenseins der Strömungsführungswandungsanordnung 46 zwangsweise nach unten in Richtung zum Raumbereich 38 ausweichen und gelangt somit zwangsweise auch in den Volumenbereich zwischen den einzelnen Wärmeübertragungsrippen 62. Die Luft strömt dabei im Wesentlichen parallel zur Oberfläche dieser Wärmeübertragungsrippen 62, so dass hier nur eine geringe Verdämmung erzeugt wird. Da durch die nachfolgend noch detailliert beschriebene Strömungsführungswandungsanordnung 46 und den Wandungsbereich 64 des Gehäuses 16 praktisch die gesamte vom Gebläse 18 geförderte Luft gezwungen wird, zwischen die Wärmeübertragungsrippen 62 einzutreten, ist eine sehr effiziente Wärmeübertragung von diesen Wärmeübertragungsrippen 62 und auch vom Wärmetauscherkörper 48 auf die Luft sichergestellt. Die Luft verlässt dann den Raumbereich 38 in einem zwischen der Strömungsführungswandungsanordnung 46 und dem Gehäuse 16 gebildeten Strömungsbereich in Richtung zum Raumbereich 28.

Wird die Stellklappe 44 verschwenkt, so dass sie eine zur Positionierung in Fig. 1 näherungsweise um 180° verschwenkte Positionierung einnimmt, wird die vom Gebläse 18 geförderte Luft im Wesentlichen in Richtung eines strichliert eingezeichneten Pfeils strömen, da durch die dann verschwenkte Stellklappe 44 der an dem Wärmetauscher 40 vorbeiführende bzw. durch diesen hindurch führende Strömungsweg blockiert ist. Die geförderte Luft wird dann praktisch nicht in thermische Wechselwirkung mit dem Wärmetauscher 40 treten bzw. auch nicht den darin zwangsweise vorhandenen Drosselwirkungen unterworfen, was vor allem dann von Vorteil ist, wenn die Luft ohne zusätzliche Wärmeaufnahme in den Raumbereich 28 strömen soll, beispielsweise weil das Heizgerät 42 nicht aktiviert ist.

Man erkennt bei der in den Figuren 1 bis 3 dargestellten Ausgestaltungsform der Strömungsführungswandungsanordnung 46, dass diese zwei Teile umfasst. Ein erster Teil 66 erstreckt sich im radialen Bereich der Wärmeübertragungsrippen 62 und ist insbesondere mit diesen Wärmeübertragungsrippen 62 bzw. dem gesamten Wärmetauscher 40 integral ausgestaltet. Dies ist auch der zeichnerischen Darstellung der Fig. 2 zu entnehmen. Dieser erste Teil 66 der Strömungsführungswandungsanordnung 46 erstreckt sich nach radial außen, radial bezogen auf die Längserstreckungsrichtung L des Wärmetauscherkörpers 48, weiter als die Wärmeübertragungsrippen 62, so dass hier ein geringer radialer Überstand 68 gebildet ist.

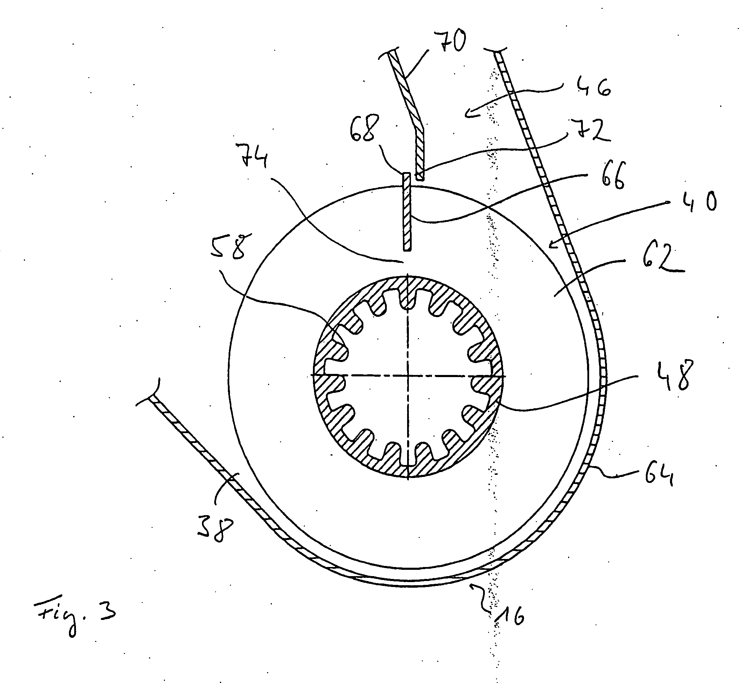

Ein zweiter Teil 70 der Strömungsführungswandungsanordnung 46 ist hier gehäusefest vorgesehen, also mit dem Gehäuse 16 fest verbunden oder durch dieses bereitgestellt. Dieser zweite Teil 70 der Strömungsführungswandungsanordnung 46 reicht radial bis an den Außenumfang der Wärmeübertragungsrippen 62 heran, weist aber beispielsweise dazu noch einen geringen Abstand auf und überlappt sich in radialer Richtung mit dem Überstand 68 des ersten Teils 66 der Strömungsführungswandungsanordnung 46. Dabei ist ein spaltartiger Zwischenraum 72 geschaffen, der in einem Bereich radial außerhalb der Wärmeübertragungsrippen 62 den Durchtritt einer geringen Luftmenge zulässt. Weiterhin erkennt man in den Fig. 2 und 3, dass der erste Teil 66 der Strömungsführungswandungsanordnung 46 zwar radial in dem Bereich der Wärmeübertragungsrippen 62 liegt und somit die zwischen diesen Wärmeübertragungsrippen 62 vorhandenen Volumina bereichsweise abschließt, dass jedoch in der dargestellten Ausführungsform in Zuordnung zu allen jeweils nebeneinander liegenden Wärmeübertragungsrippen 62 radial innerhalb des ersten Teils 66 ein Durchtrittszwischenraum 74 gebildet ist, der ebenfalls den Durchtritt einer geringen Luftmenge zulässt. Dies kann, wie vorangehend dargestellt und vor allem in Fig. 2 erkennbar, bei allen paarweise beieinander liegenden Wärmeübertragungsrippen 62 der Fall sein, kann jedoch auch nur bei einem Teil davon der Fall sein. Ferner ist es selbstverständlich möglich, auch nur bei einem Teil der Wärmeübertragungsrippen 62 die Strömungsführungswandungsanordnung 46 so vorzusehen, dass sie sich zwischen diese hineinerstreckt bzw. auch zwischen diesen positioniert ist, während bei einem anderen Teil das zwischen verschiedenen Wärmeübertragungsrippen 62 gebildete Volumen nicht durch irgendeine Wandung gegen Durchströmung blockiert ist. Dies gilt sowohl für die Ausgestaltung der Fig. 1 bis 3, also auch für die nachfolgend noch beschriebenen Varianten.

Das Vorhandensein der vorangehend beschriebenen Zwischenräume 72, 74 hat zur Folge, dass in demjenigen Bereich, in dem die Strömungsführungswandungsanordnung 46 zwischen die Wärmeübertragungsrippen 62 eingreift, kein vollständiger Abschluss gegen Durchströmung oder Umströmung vorhanden ist. Ein vollständiger Abschluss hätte zur Folge, dass durch den auftretenden Strömungsstau die in diesem Bereich vom Wärmetauscherkörper 48 und den Wärmeübertragungsrippen 62 aufgenommene Wärme nur sehr schlecht auf die zu fördernde Luft übertragen werden kann. Da jedoch durch das Vorhandensein der Zwischenräume 72 oder/und 74 zumindest eine geringe Durchströmbarkeit auch dieser Volumenbereiche gewährleistet ist, kann auch dort aufgenommene Wärme auf die strömende Luft übertragen und somit in den Fahrzeuginnenraum transportiert werden.

Das Bereitstellen der bis in den Bereich der Wärmeübertragungsrippen 62 hineinreichenden Strömungsführungswandungsanordnung 46 führt also dazu, dass vor allem dann, wenn im Heizgerät 42 Wärme bereitgestellt wird und auf die zu fördernde Luft übertragen werden soll, die hierfür an den Wärmeübertragungsrippen 62 und dem Wärmetauscherkörper 48 bereitgestellte Oberfläche in sehr effizienter Art und Weise angeströmt bzw. umströmt werden kann. Dies hat eine sehr effiziente Wärmeübertragung und einen entsprechend hohen Wirkungsgrad des Heizgeräts 42 zur Folge. Vor allem bei der vorangehend und nachfolgend auch noch beschriebenen Variante, bei welcher die Strömungsführungswandungsanordnung 46 bzw. zumindest der erste Teil 66 einen integralen Bestandteil des Wärmetauschers 40 bildet, gewährleistet der dadurch zusätzlich hergestellte Wärmeübertragungskontakt zwischen den einzelnen Rippen 62 eine sehr gute und gleichmäßige Wärmeverteilung. Ferner wird die gesamte zur Wärmeübertragung nutzbare Oberfläche vergrößert, da auch der erste Teil 66 der Strömungsführungswandungsanordnung 46 auf Grund seines Kontakts mit den Wärmeübertragungsrippen 62 Wärme aufnimmt und an die ihn umströmende Luft abgeben kann. Neben der Erhöhung der Stabilität ist ein weiterer Vorteil, dass der Gussvorgang leichter durchführbar ist, da über denjenigen Volumenbereich, der im fertigen Teil dann den ersten Teil 66 der Strömungsführungswandungsanordnung 46 bildet, eine zusätzliche Befüllung der die Rippen 62 ausbildenden Formbereiche ermöglicht ist.,

Deutlich erkennbar ist vor allem in Fig. 3 auch der in seiner Form an die Außenkontur der Wärmeübertragungsrippen 62 angepasste Bereich 64 des Gehäuses 16. Dieser umgibt einen Teilbereich des Außenumfangs der Wärmeübertragungsrippen 62 mit geringem Abstand bzw. ist durch seine Form bzw. Konturenanpassung so positionierbar, dass praktisch die gesamte in diesem Bereich auch strömende Luft in Wärmeübertragungskontakt mit der Oberfläche der Wärmeübertragungsrippen 62 treten kann.

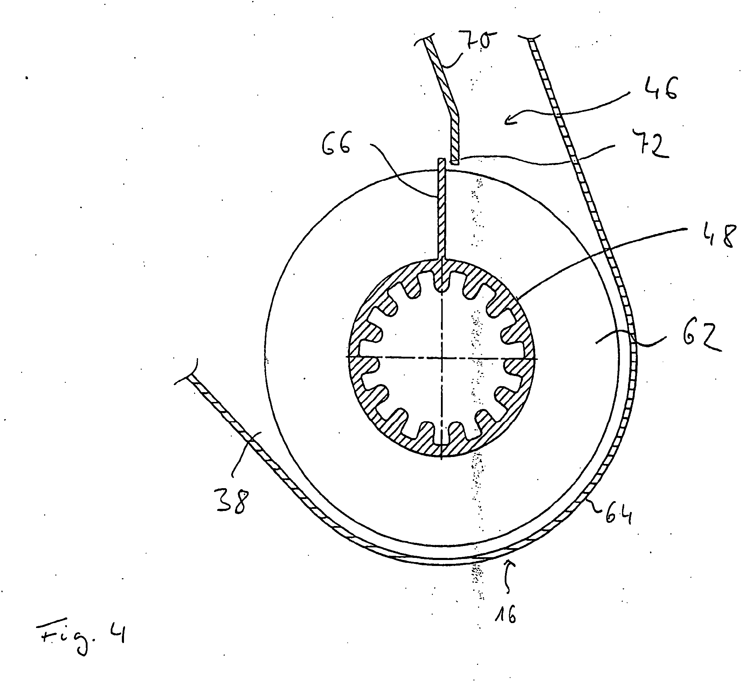

Eine etwas abgewandelte Ausgestaltungsform ist in Fig. 4 gezeigt. Dort erkennt man, dass der erste Teil 66 der Strömungsführungwandungsanordnung 46 bis an die Außenoberfläche des Wärmetauscherkörpers 48 heranreicht bzw. bei der dargestellten Ausgestaltungsform an diesen auch integral anschließt. Es bleibt bei dieser Ausgestaltungsform der Zwischenraum 72 für den Durchtritt von Luft, während im radial weiter innen liegenden Bereich keine Durchtrittsmöglichkeit besteht. Hier wäre es grundsätzlich auch möglich, die beiden in den Fig. 1 bis 3 einerseits und in Fig. 4 andererseits dargestellten Ausgestaltungsformen zu kombinieren, und bei einigen der zwischen zwei Wärmeübertragungsrippen 62 vorhandenen Zwischenräume die Durchströmung auch im radial inneren Bereich freizugeben, während bei anderen dies nicht zugelassen ist.

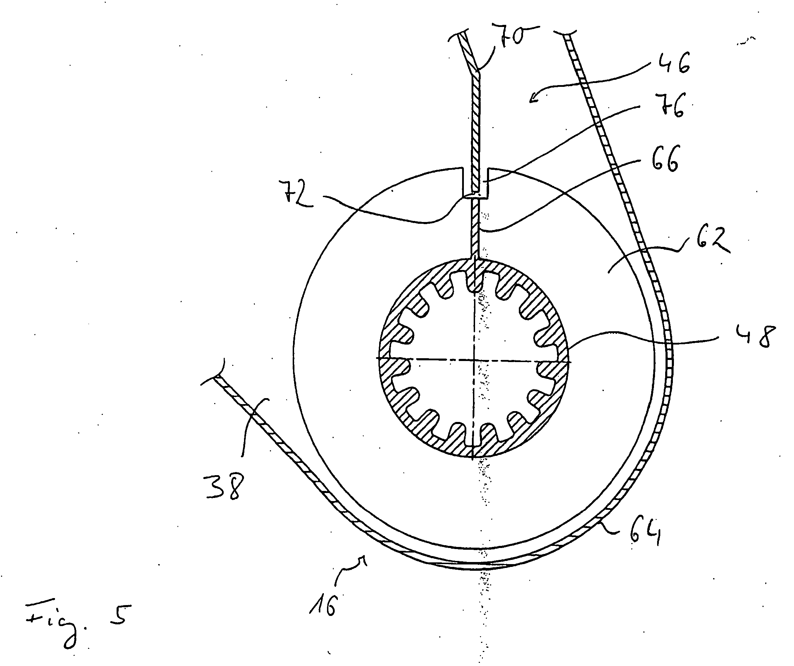

Bei der in Fig. 5 dargestellten Ausgestaltungsvariante weisen die Wärmeübertragungsrippen 62 in demjenigen Umfangsbereich, in welchem sich auch der erste Teil 66 der Strömungsführungswandungsanordnung 46 erstreckt, in ihrem radial äußeren Bereich eine Aussparung 76 auf. Im dargestellten Ausgestaltungsbeispiel ist dieses Aussparung 76 jeweils so tief, dass sie sich bis in den radialen Bereich erstreckt, in welchem der erste Teil 66 der Strömungsführungswandungsanordnung 46 radial außen endet. In diese in der Längsrichtung des Wärmetauscherkörpers 48 aufeinander folgend ausgerichtet liegenden Aussparungen 76 greift der zweite Teil 70 der Strömungsführungswandungsanordnung 46 von radial außen ein, und zwar so, dass er nicht in direktem Kontakt mit den Wärmeübertragungsrippen 62 gelangt. Auch ist zwischen dem radial inneren Ende des zweiten Teils 70 und dem radialen äußeren Ende des ersten Teils 66 wieder der Zwischenraum 72 gebildet, so dass einerseits, ebenso wie bei der vorangehend beschriebenen Ausgestaltungsform, ein direkter Wärmeübertragungskontakt hier vermieden ist und andererseits ein Durchtritt von Luft möglich ist.

Es ist selbstverständlich, dass auch diese Ausgestaltungsform im radial inneren Bereich des ersten Teils 66 so gestaltet sein kann, wie bei der Ausgestaltungsform gemäß Fig. 4, oder so gestaltet sein kann, wie bei der Ausgestaltungsform gemäß den Fig. 1 bis 3, oder wie eine Kombination dieser Varianten vorgesehen sein kann.

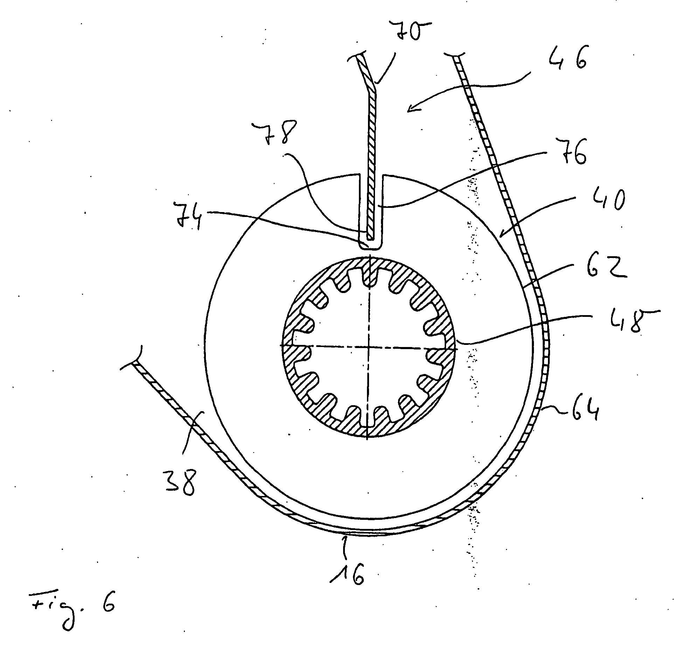

In Fig. 6 ist eine Ausgestaltungsform gezeigt, bei welcher die Strömungsführungswandungsanordnung 46 vollständig als separates Bauteil oder als separate Baugruppe bereitgestellt ist, beispielsweise nur noch mit demjenigen Teil, der vorangehend jeweils als zweiter Teil 70 bezeichnet worden ist. Die zuvor bei der Ausgestaltungsform gemäß Fig. 5 bereits angesprochenen Aussparungen 76 in den Wärmeübertragungsrippen 62 sind hier weiter nach radial innen geführt und reichen nahezu bis an den Außenumfang des Wärmetauscherkörpers 48 heran. Der Teil 70 bzw. die Strömungsführungswandungsanordnung 46 greift in diese in Flucht zueinander liegenden Aussparungen 76 der Wärmeübertragungsrippen 62 ein und erstreckt sich mit dem radial inneren Ende 78 somit bis nahe an den Wärmetauscherkörper 48 heran. Auch hier ist kein direkter Wärmeübertragungskontakt zwischen dem Wärmetauscher 40 bzw. den Wärmeübertragungsrippen 62 desselben vorhanden, während gleichwohl im radial inneren Bereich der Zwischenraum 74 zwischen dem radial inneren Ende 78 und dem Wärmetauscherkörper 48 vorhanden ist, so dass hier ein Teil der geförderten Luft hindurchströmen kann.

Durch die erfindungsgemäße Ausgestaltungsform eines Temperiersystems vor allem in demjenigen Raumbereich, in welchem der Wärmetauscher eines Fahrzeugheizgeräts zur Wärmeübertragung auf die zu fördernde Luft zu umströmen ist, wird sichergestellt, dass dann, wenn dieser Wärmeübertrag stattfinden soll, dies mit hoher Effizienz geschieht. Hierzu ist es besonders vorteilhaft, wenn die Strömungsführungswandungsanordnung so gestaltet ist, dass sie sich auch in der Längsrichtung des Wärmetauscherkörpers vollständig über diesen hinwegerstreckt. Selbstverständlich ist es aber auch denkbar, nur in Teilbereichen in dieser Längsrichtung eine derartige Strömungsführungswandungsanordnung bzw. Abschnitte derselben vorzusehen und andere Teilbereiche zur Durchströmung zu öffnen.

## Patentansprüche

1. Fahrzeugtemperiersystem, umfassend ein Gehäuse (16) in dem eine die Strömung in Richtung zu einem Wärmetauscher (40) leitende Strömungsführungswandungsanordnung (46) vorgesehen ist und in dem ein zu konditionierende Luft förderndes Luftfördergebläse (18) und der Wärmetauscher (40) eines Heizgerates (42) angeordnet sind, **dadurch gekennzeichnet, dass**: der Wärmetauscher (40) einen im Wesentlichen quer zu einer Luftströmungsrichtung langgestreckten Wärmetauscherkörper (48) und an diesem eine Mehrzahl von in Richtung der Längserstreckung des Wärmetauscherkörpers (48) in Abstand zueinander angeordneten Wärneübertragungsrippen (62) umfasst, und die Strömungsführungswandungsanordnung (46) sich wenigstens bereichsweise in den Bereich zwischen Wärmeübertragungsrippen (62) hinein erstreckt.

2. Fahrzeugtemperiersystem nach Anspruch 1,
**dadurch gekennzeichnet, dass** die Strömungsführungswandungsanordnung (46) bis an den Wärmetauscherkörper (48) heranreicht und an diesen anschließt.

3. Fahrzeugtemperiersystem nach Anspruch 1 oder 2,
**dadurch gekennzeichnet, dass** wenigstens bereichsweise zwischen der Strömungsführungswandungsanordnung (46) und dem Wärmetauscherkörper (48) ein Strömungsdurchtrittszwischenraum (74) gebildet ist.

4. Fahrzeugtemperiersystem nach einem der Ansprüche 1 bis 3,
**dadurch gekennzeichnet, dass** die Strömungsführungswandungsanordnung (46) von dem Wärmetauscher (40) getrennt ausgebildet ist und dass die Wärmeübertragungsrippen (62) einen Aussparungsbereich (76) bilden, in welchen die Strömungsführungswandungsanordnung (46) eingreift.

5. Fahrzeugtemperiersystem nach einem der Ansprüche 1 bis 3,
**dadurch gekennzeichnet, dass** wenigstens ein erster Teil (66) der Strömungsführungswandungsanordnung (46) mit dem Wärmetauscher (40) integral ausgebildet ist.

6. Fahrzeugtemperiersystem nach Anspruch 5,
**dadurch gekennzeichnet, dass** der erste Teil (66) der Strömungsführungswandungsanordnung (46) sich radial - bezogen auf die Längserstreckungsrichtung (L) des Wärmetauscherkörpers (48) - über die Wärmeübertragungsrippen (62) hinaus erstreckt.

7. Fahrzeugtemperiersystem nach Anspruch 5,
**dadurch gekennzeichnet, dass** der erste Teil (66) der Strömungsführungswandungsanordnung (46) eine geringere Radialerstreckung - radial bezogen auf die Längserstreckungsrichtung (L) des Wärmetauscherkörpers (48) - aufweist, als die Wärmeübertragungsrippen (62).

8. Fahrzeugtemperiersystem nach Anspruch 6 oder 7,
**dadurch gekennzeichnet, dass** ein von dem Wärmetauscher (40) getrennt ausgebildeter zweiter Teil (70) der Strömungsführungswandungsanordnung (46) sich radial bis an den ersten Teil (66) der Strömungsführungswandungsanordnung (46) heran erstreckt.

9. Fahrzeugtemperiersystem nach Anspruch 8,
**dadurch gekennzeichnet, dass** zwischen dem ersten Teil (66) der Strömungsführungswandung (46) und dem zweiten Teil (70) der Strömungsführungswandungsanordnung (46) wenigstens bereichsweise ein Strömungsdurchtrittszwischenraum (72) gebildet ist.

10. Fahrzeugtemperiersystem nach Anspruch 8 oder 9, sofern auf Anspruch 6 rückbezogen,
**dadurch gekennzeichnet, dass** der erste Teil (66) der Strömungsführungswandungsanordnung (46) und der zweite Teil (70) der Strömungsführungswandungsanordnung (46) sich radial überlappen.

11. Fahrzeugtemperiersystem nach Anspruch 8 oder 9, sofern auf Anspruch 7 rückbezogen,
**dadurch gekennzeichnet, dass** die Wärmeübertragungsrippen (62) einen Aussparungsbereich (76) bilden, in welchen der zweite Teil (70) der Strömungsführungswandungsanordnung (46) eingreift.

12. Fahrzeugtemperiersystem nach einem der Ansprüche 1 bis 11,
**dadurch gekennzeichnet, dass** das Luftfördergebläse (18) in Strömungsrichtung stromaufwärts des Wärmetauschers (40) angeordnet ist.

13. Fahrzeugtemperiersystem nach einem der Ansprüche 1 bis 12,
**dadurch gekennzeichnet, dass** stromaufwärts des Wärmetauschers (40) eine Verdampferanordnung (26) einer Klimaanlage angeordnet ist.

14. Fahrzeugtemperiersystem nach einem der Ansprüche 1 bis 13,
**dadurch gekennzeichnet, dass** stromabwärts des Wärmetauschers (40) ein weiterer Wärmetauscher (30) eines Fahrzeugkühlmittelkreislaufs angeordnet ist.

## Claims

1. Temperature control system for a vehicle, comprising a housing (16)
wherein a flow guiding wall arrangement (46) guiding the flow towards a heat exchanger (40) is provided, and wherein an air conveying blower (18) conveying air to be conditioned and the heat exchanger (40) of a heating device are arranged, **characterized in** the heat exchanger (40) comprising a heat exchanger body (48) elongated substantially transversely to an air flow direction, and thereon a plurality of heat transfer ribs (62) which are spaced in the longitudinal direction of the heat exchanger body (48), and in the flow guiding wall arrangement (46) extending at least partially into the region between the heat transfer ribs (62).

2. Temperature control system for a vehicle according to claim 1, **characterized in** the flow guiding wall arrangement (46) extending up to the heat exchanger body (48) and connecting to the latter.

3. Temperature control system for a vehicle according to claim 1 or 2, **characterized in** a flow passage space (74) being at least in some areas formed between the flow guiding wall arrangement (46) and the heat exchanger body (48).

4. Temperature control system for a vehicle according to one of claims 1 to 3, **characterized in** the flow guiding wall arrangement (46) being formed separately from the heat exchanger (40) and in the heat transfer ribs (62) forming a recess area (76) where the flow guiding wall arrangement (46) engages.

5. Temperature control system for a vehicle according to one of claims 1 to 3, **characterized in** at least a first part (66) of the flow guiding wall arrangement (46) being formed integrally with the heat exchanger (40).

6. Temperature control system for a vehicle according to claim 5, **characterized in** the first part (66) of the flow guiding wall arrangement (46) extending radially - in relation to the longitudinal direction (L) of the heat exchanger body (48) - beyond the heat transfer ribs (62).

7. Temperature control system for a vehicle according to claim 5, **characterized in** the first part (66) of the flow guiding wall arrangement (46) having a shorter radial extent - radially, in relation to the longitudinal direction (L) of the heat exchanger body (48) - than the heat transfer ribs (62).

8. Temperature control system for a vehicle according to claim 6 or 7, **characterized in** a second part (70) of the flow guiding wall arrangement (46) formed separately from the heat exchanger (40) extending radially up to the first part (66) of the flow guiding wall arrangement (46).

9. Temperature control system for a vehicle according to claim 8, **characterized in** a flow passage space (72) being at least in some areas formed between the first part (66) of the flow guiding wall arrangement (46) and the second part (70) of the flow guiding wall arrangement (46).

10. Temperature control system for a vehicle according to claim 8 or 9, if depending on claim 6,
**characterized in** the first part (66) of the flow guiding wall arrangement (46) and the second part (70) of the flow guiding wall arrangement (46) overlapping radially.

11. Temperature control system for a vehicle according to claim 8 or 9, if depending on claim 7,
**characterized in** the heat transfer ribs (62) forming a recess area (76) where the second part (70) of the flow guiding wall arrangement (46) engages.

12. Temperature control system for a vehicle according to one of claims 1 to 11,
**characterized in** the air conveying blower (18) being arranged upstream of the heat exchanger (40) in the flow direction.

13. Temperature control system for a vehicle according to one of claims 1 to 12,
**characterized in** an evaporator arrangement (26) of an air conditioning system being arranged upstream of the heat exchanger (40).

14. Temperature control system for a vehicle according to one of claims 1 to 13,
**characterized in** a further heat exchanger (30) of a vehicle coolant circuit being arranged downstream of the heat exchanger (40).

## Revendications

1. Système de contrôle de la température pour un véhicule, comprenant un boîtier (16) auquel un arrangement de paroi de guidage du courant (46) guidant le courant envers un 'échangeur de chaleur (40) est prévu, et auquel une soufflerie (18) pour faire avancer de l'air à conditionner et l'échangeur de chaleur d'un dispositif de chauffage sont prévus, **caractérisé par** l'échangeur de chaleur (40) comprenant un corps d'échangeur de chaleur (48) allongé essentiellement en travers de la direction de courant d'air, et à ce dernier une pluralité de renforts de transmission de chaleur (62) espacés dans la direction longitudinale du corps d'échangeur de chaleur (48), et par l'arrangement de paroi de guidage du courant (46) s'étendant au moins partiellement dans la région entre les renforts de transmission de chaleur (62).

2. Système de contrôle de la température pour un véhicule selon la revendication 1,
**caractérisé par** l'arrangement de paroi de guidage du courant (46) s'étendant jusqu'au corps d'échangeur de chaleur (48) et se rattachant à ce dernier.

3. Système de contrôle de la température pour un véhicule selon la revendication 1 ou 2,
**caractérisé par** un espace de passage de courant (74) étant formé au moins par endroits entre l'arrangement de paroi de guidage du flux (46) et le corps d'échangeur de chaleur (48).

4. Système de contrôle de la température pour un véhicule selon une des revendications 1 à 3,
**caractérisé par** l'arrangement de paroi de guidage du flux (46) étant formé séparément de l'échangeur de chaleur (40) et par les renforts de transmission de chaleur (62) formant un endroit de niche (76) où l'arrangement de paroi de guidage du flux (46) peut s'interposer.

5. Système de contrôle de la température pour un véhicule selon une des revendications 1 à 3,
**caractérisé par** au moins une première part (66) de l'arrangement de paroi de guidage du flux (46) étant formée intégralement avec l'échangeur de chaleur (40).

6. Système de contrôle de la température pour un véhicule selon la revendication 5,
**caractérisé par** la première part (66) de l'arrangement de paroi de guidage du flux (46) s'étendant radialement - relatif à la direction longitudinale (L) du corps d'échangeur de chaleur (48) - au-delà des renforts de transmission de chaleur (62).

7. Système de contrôle de la température pour un véhicule selon la revendication 5,
**caractérisé par** la première part (66) de l'arrangement de paroi de guidage du flux (46) ayant une moindre longueur radiale - relatif à la direction longitudinale (L) du corps d'échangeur de chaleur (48) - que les renforts de transmission ce chaleur (62).

8. Système de contrôle de la température pour un véhicule selon la revendication 6 ou 7,
**caractérisé par** une deuxième part (70) de l'arrangement de paroi de guidage du flux (46) formée séparément de l'échangeur de chaleur (40) s'étendant radialement jusqu'à la première part (66) de l'arrangement de paroi de guidage du flux (46).

9. Système de contrôle de la température pour un véhicule selon la revendication 8,
**caractérisé par** un espace de passage de courant (72) étant formé au moins dans quelques régions entre la première part (66) de l'arrangement de paroi de guidage du flux (46) et la deuxième part (70) de l'arrangement de paroi de guidage du flux (46).

10. Système de contrôle de la température pour un véhicule selon la revendication 8 ou 9,
si dépendante de la revendication 6,
**caractérisé par** la première part (66) de l'arrangement de paroi de guidage du flux (46) et la deuxième part (70) de l'arrangement de paroi de guidage du flux (46) s'enchevauchant radialement.

11. Système de contrôle de la température pour un véhicule selon la revendication 8 ou 9,
si dépendante de la revendication 7,
**caractérisé par** les renforts de transmission de chaleur (62) formant un endroit de niche (76) où la deuxième part (70) de l'arrangement de paroi de guidage du flux (46) peut s'interposer.

12. Système de contrôle de la température pour un véhicule selon les revendications 1 à 11,
**caractérisé par** la soufflerie (18) pour faire avancer de l'air étant arrangée en amont de l'échangeur de chaleur (40) dans la direction du courant.

13. Système de contrôle de la température pour un véhicule selon les revendications 1 à 12,
**caractérisé par** l'arrangement d'évaporateur (26) d'un système de climatisation étant arrangé en amont de l'échangeur de chaleur (40).

14. Système de contrôle de la température pour un véhicule selon les revendications 1 à 13,
**caractérisé par** un autre échangeur de chaleur (30) d'un circuit de réfrigérant de véhicule étant arrangé en aval de l'échangeur de chaleur (40).
